# EUROPEAN PATENT SPECIFICATION

(11) **EP 4 151 192 B1**
(45) Date of publication and mention of the grant of the patent: **09.04.2025**
(21) Application number: 21831914.3
(22) Date of filing: 02.02.2021
(51) Int. Cl.: A61H 3/00, A61H 37/00, B25J 9/00, A61H 1/02

(54) **SUPPORTER HAVING BISTABLE SPRING, AND EXERCISE ASSISTANCE APPARATUS INCLUDING SAME**
STÜTZE MIT BISTABILER FEDER UND ÜBUNGSUNTERSTÜTZUNGSVORRICHTUNG DAMIT
SUPPORT AYANT UN RESSORT BISTABLE, ET APPAREIL D'AIDE À L'EXERCICE LE COMPRENANT

(30) Priority: 03.07.2020 KR 20200082241; 21.10.2020 KR 20200136636
(43) Date of publication of application: 22.03.2023
(73) Proprietor: Samsung Electronics Co., Ltd., Gyeonggi-do 16677 (KR)
(72) Inventor: CHOI, Byungjune, Suwon-si, Gyeonggi-do 16677 (KR); LEE, Younbaek, Suwon-si, Gyeonggi-do 16677 (KR); ROH, Se-gon, Suwon-si, Gyeonggi-do 16677 (KR); LEE, Minhyung, Suwon-si, Gyeonggi-do 16677 (KR)
(74) Representative: Gulde & Partner
(86) International application number: PCT/KR2021/001341
(87) International publication number: WO 2022/004983

(56) References cited:
- EP-A2- 3 132 783
- JP-A- 2002 523 182
- JP-A- 2006 087 533
- JP-A- 2018 143 720
- KR-A- 20170 024 680
- US-A1- 2006 052 731
- US-A1- 2010 298 746
- US-A1- 2012 316 477

## Description

### Technical Field

The following description relates to a supporter having a bistable spring and an exercise assistance apparatus including same.

### Background Art

In general, an exercise assistance apparatus refers to a mechanism or a device that helps a patient, who cannot walk on their own due to various diseases, accidents, and the like, to perform exercises for rehabilitation treatment. With aging societies recently accelerating, more people experience inconvenience in exercise or have difficulty in doing normal exercise due to malfunctioning joint issues, and accordingly, there is increasing interest in an exercise assistance apparatus. An exercise assistance apparatus is worn on the body of a user to assist a muscular strength necessary for the user's exercise and to induce the user to walk for normal exercise.

In general, those with a physical disability wear an exercise assistance apparatus. Unfortunately, they may find it difficult to undergo the process of wearing the exercise assistance apparatus. Accordingly, there is a need for technology that allows a user with limited physical mobility to put on an exercise assistance apparatus by themselves without the help of another person.

The above description is information the inventor(s) acquired during the course of conceiving the present disclosure, or already possessed at the time, and is not necessarily art publicly known before the present application was filed.

US 2006/0052731 A1 discloses a walking assistance device including: a pelvis support member adapted to be worn around a hip of a wearer; and at least one actuator having a base end mounted on the pelvis support member and a free end engaging a thigh of the wearer, wherein the pelvis support member comprises a substantially U-shaped base portion having a relatively high rigidity and adapted to be worn around the hip of the wearer and a pair of flaps having a relatively high resilient flexibility and extending from either end of the base portion toward each other.

### Disclosure of the Invention

### Technical Solutions

According to an embodiment, a supporter according is provided as defined in the appended claims.

Where the bistable spring is in the first stable state, each of the pair of straps may maintain a shape extending forward from the main frame.

Where both of the bistable springs provided inside the pair of straps, respectively, are in the second stable state, each of the straps may overlap the other.

The bistable spring may have a protruding shape in a direction perpendicular to the longitudinal direction when the bistable spring is in the first stable state, and a curvature of the protruding shape may decrease during transition from the first stable state to the second stable state.

A position of the bistable spring may be fixed based on a longitudinal direction of the strap.

The strap may include an accommodation space for accommodating the bistable spring, and a width of the accommodation space may be greater than a width of the strap, based on a direction perpendicular to a longitudinal direction of the strap.

A width of the bistable spring in the second stable state may be greater than a width of the bistable spring in the first stable state and may be less than the width of the accommodation space.

The supporter may further include a pad provided inside the strap and configured to overlap the bistable spring with respect to a direction perpendicular to a longitudinal direction of the strap.

The pad may be detachable from the strap.

The supporter may further include a pair of auxiliary straps connected to any one of the pair of straps and configured to wrap around the other strap.

The supporter may further include an auxiliary bistable spring provided inside each of the auxiliary straps.

The supporter may further include an inner frame provided inside the strap and including a material that is relatively stiffer than that of the strap.

The inner frame may include a first inner frame extending from the main frame and connected to the bistable spring; and a second inner frame extending from the bistable spring toward an end portion of the strap.

The bistable spring may be provided in plurality, and the bistable springs may be apart from each other in a longitudinal direction of the strap.

According to an embodiment, an exercise assistance apparatus is provided as defined in the appended claims.

The two stable states may include a first stable state in which the bistable spring has a shape extending straight along the longitudinal direction and a second stable state in which the bistable spring has a shape that is bent once, and the shape of the strap may be determined according to the shape of the bistable spring.

Where the bistable spring is in the first stable state, each of the straps may maintain a shape extending forward from the main frame.

The exercise assistance apparatus may further include a pad provided inside the strap and configured to overlap the bistable spring with respect to a direction perpendicular to a longitudinal direction of the strap.

The exercise assistance apparatus may further include an inner frame provided inside the strap and include a material that is relatively stiffer than that of the strap.

### Brief Description of Drawings

FIG. 1 is a front view of an exercise assistance apparatus according to an example embodiment.
FIG. 2 is a side view of an exercise assistance apparatus according to an example embodiment.
FIG. 3 is a plan view illustrating a supporter when a bistable spring is in a first stable state, according to an example embodiment.
FIG. 4 is a plan view illustrating a supporter when a bistable spring is in a second stable state, according to an example embodiment.
FIG. 5 is a perspective view illustrating a bistable spring in a first stable state.
FIG. 6 is a perspective view illustrating a bistable spring in a second stable state.
FIG. 7 is a graph schematically illustrating potential energy according to a displacement angle of a bistable spring.
FIG. 8 is a cross-sectional view taken along the line VIII-VIII of FIG. 3.
FIG. 9 is a cross-sectional view taken along the line IX-IX of FIG. 4.
FIG. 10 is a cross-sectional view illustrating a main frame, a strap, and a bistable spring, according to an example embodiment.
FIG. 11 is a cross-sectional view illustrating a view in which a second strap approaches a first strap.
FIG. 12 is a cross-sectional view illustrating a state in which a pair of straps is fixed by a fastening member.
FIGS. 13 and 14 are plan views illustrating a supporter according to an example embodiment.
FIG. 15 is a plan view schematically illustrating a supporter according to an example embodiment.
FIGS. 16 and 17 are cross-sectional views illustrating a main frame, a strap, a bistable spring, and an inner frame, according to an example embodiment.
FIG. 18 is a front view schematically illustrating a view in which a supporter is worn on the body, according to an example embodiment.

### Best Mode for Carrying Out the Invention

The following structural or functional descriptions of examples are merely intended for the purpose of describing the examples and the examples may be implemented in various forms. Here, examples are not construed as limited to the disclosure and should be understood to include all changes, and replacements within the technical scope of the disclosure.

Terms, such as first, second, and the like, may be used herein to describe various components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

The same name may be used to describe an element included in the example embodiments described above and an element having a common function. Unless otherwise mentioned, the descriptions on the example embodiments may be applicable to the following example embodiments and thus, duplicated descriptions will be omitted for conciseness.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, examples will be described in detail with reference to the accompanying drawings. When describing the example embodiments with reference to the accompanying drawings, like reference numerals refer to like constituent elements and a repeated description related thereto will be omitted.

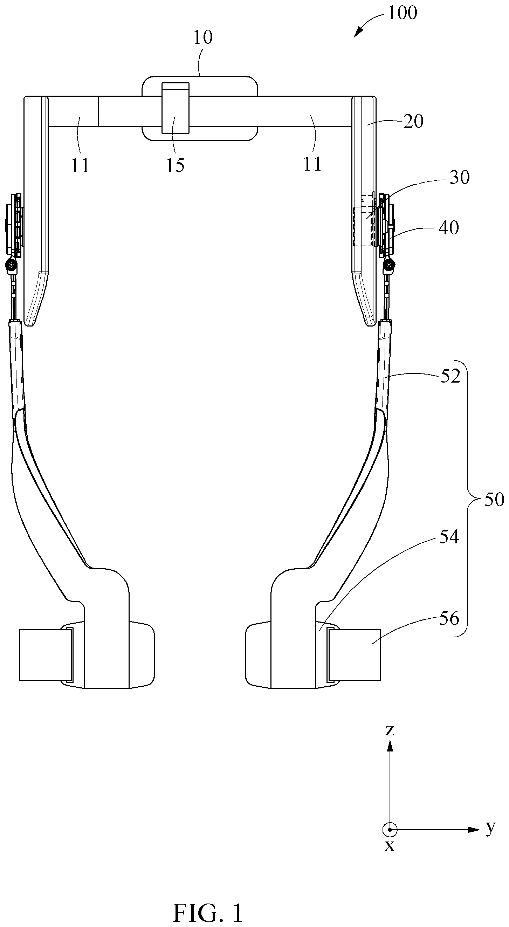

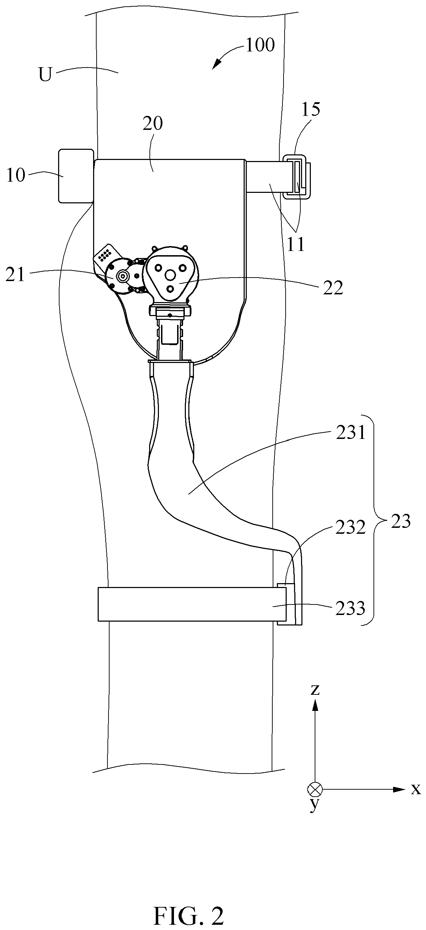

FIG. 1 is a front view illustrating an exercise assistance apparatus according to an example embodiment, and FIG. 2 is a side view illustrating an exercise assistance apparatus according to an example embodiment.

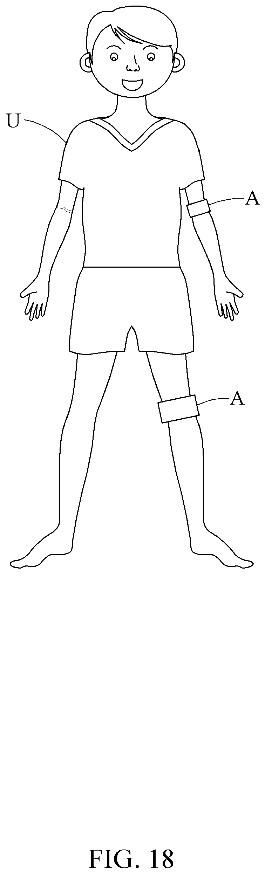

Referring to FIGS. 1 and 2, an exercise assistance apparatus 100 may be worn by a user to assist a motion of the user. The user may be a human, an animal, or a robot but may not be limited thereto. In addition, although FIG. 1 illustrates a case in which the exercise assistance apparatus 100 assists the user's thigh exercise, the exercise assistance apparatus 100 may assist other parts of the upper body, such as a hand, an upper arm, and a lower arm of the user, or other parts of the lower body, such as a foot and calf of the user (see FIG. 18). That is, the exercise assistance apparatus 100 may assist a motion of a part of the user's body. Hereinafter, a case in which the exercise assistance apparatus 100 assists a motion of a person's thigh is described as an example.

The exercise assistance apparatus 100 may include a main body 10, a pair of main frames 20, a pair of straps 11, and an auxiliary strap 15 connected to any one of the pair of straps 11, an actuator 21, a joint member 22, and a driving frame 23.

The main body 10 may accommodate, therein, a controller (not shown) for controlling the actuator 21 and a power supply (not shown) for supplying power to the actuator 21. For example, the main body 10 may be on the user's back side, based on a state in which the exercise assistance apparatus 100 is worn on the user's body.

The pair of main frames 20 may be connected to the main body 10. The main frame 20 may be fixed onto the user. The main frame 20 may contact at least a portion of the user's outer surface. The main frame 20 may have a shape surrounding the user's outer surface. The main frame 20 may be curved in a shape corresponding to the user's contacted portion. That is, the main frame 20 may include a curved surface in contact with the user. For example, the main frame 20 may be fixed to one side of the user's waist.

The pair of straps 11 may be, respectively, connected to the pair of main frames 20.

The pair of straps 11 may maintain a shape extending forward (+x direction) before the user wears the exercise assistance apparatus 100 and may not prevent the user from entering the inside of the pair of main frames 20. On the other hand, where the user enters the inside of the pair of main frames 20, the pair of straps 11 may transform, as illustrated in the diagram, and wrap around the front portion of the user. The main body 10, the pair of main frames 20, and the pair of straps 11 may entirely wrap around the circumference of the user.

The pair of auxiliary straps 15 and the pair of straps 11 may be fixed to each other with the pair of straps 11 overlapping each other. For example, one of the pair of straps 11 may wrap around the other strap together with the pair of auxiliary straps 15.

The actuator 21 may provide power that is to be transmitted to the joint member 22. The actuator 21 may include a motor that generates power by receiving voltage or current from the power supply. For example, the actuator 21 may be in a lateral direction of the joint member 22. That is, a rotation axis of the actuator 21 and a rotation axis of the joint member 22 may be apart from each other. In this case, compared to the case where the actuator 21 and the joint member 22 share a rotation axis, the case where the rotation axis of the actuator 21 and the rotation axis of the joint member 22 are apart from each other may reduce a height protruding from the user. Moreover, unlike the diagram, the actuator 21 may be apart from the joint member 22. In this case, a power transmission module for transmitting power from the actuator 21 to the joint member 22 may be provided. The power transmission module may be a rotating body, such as a gear, or a longitudinal direction member, such as a wire, a cable, a string, a rubber band, a spring, a belt, or a chain. However, in an example embodiment, a position and a power transmission structure of the actuator 21 may not be limited.

The joint member 22 may receive power from the actuator 21 to assist a motion of the user's joint. The joint member 22 may be at a position corresponding to the user's joint. The joint member 22 may be on one side of the main frame 20. One side of the joint member 22 may be connected to the actuator 21, and the other side of the joint member 22 may be connected to the driving frame 23. The joint member 22 may be rotated by power transmitted from the actuator 21. An encoder for measuring a rotation angle of the joint member 22 may be on one side of the joint member 22.

The driving frame 23 may partially assist the user's motion. The driving frame 23 may be rotated by the rotational force of the joint member 22. The driving frame 23 may include a support frame 231, an action member 232, and a support member 233.

The support frame 231 may transmit an auxiliary force for assisting a motion of a part of the user's body. Here, the auxiliary force may be understood as a force acting in the same direction as a motion direction of a part of the user's body. That is, the auxiliary force may be understood as a force excluding a force in a direction intersecting with the motion direction of the part of the user's body from among forces acting on the part of the user's body. One end portion of the support frame 231 may be connected to and meet the joint member 22. The other end of the support frame 231 may be connected to the support member 233 to transmit the auxiliary force to a part of the user's body. For example, the support frame 231 may push or pull the user's thigh. The support frame 231 may extend along the longitudinal direction of the user's thigh. The support frame 231 may be bent to wrap around at least a portion of the circumference of the user's thigh.

The action member 232 may apply an auxiliary force to a part of the user's body. The action member 232 may be between the other end portion of the support frame 231 and the support member 233. For example, the action member 232 may be on one side of the user's thigh to push or pull the user's thigh. The action member 232 may be on the front side of the user's thigh. The action member 232 may be along the circumferential direction of the user's thigh. The action member 232 may extend to both sides around the other end portion of the support frame 231. The action member 232 may include a curved surface corresponding to the user's thigh.

The support member 233 may be connected to one side of the action member 232. For example, the support member 233 may surround at least a portion of the user's thigh, so that the support member 233 may prevent the user's thigh from being separated from the support frame 231.

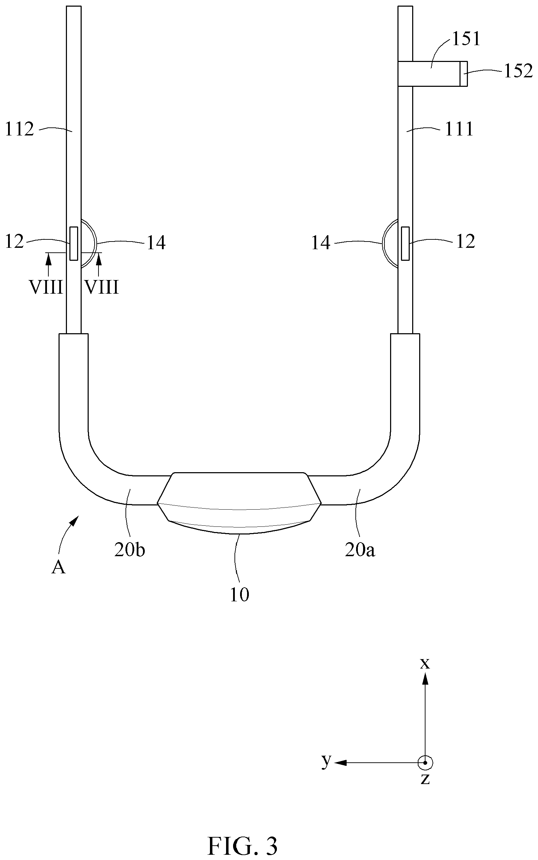

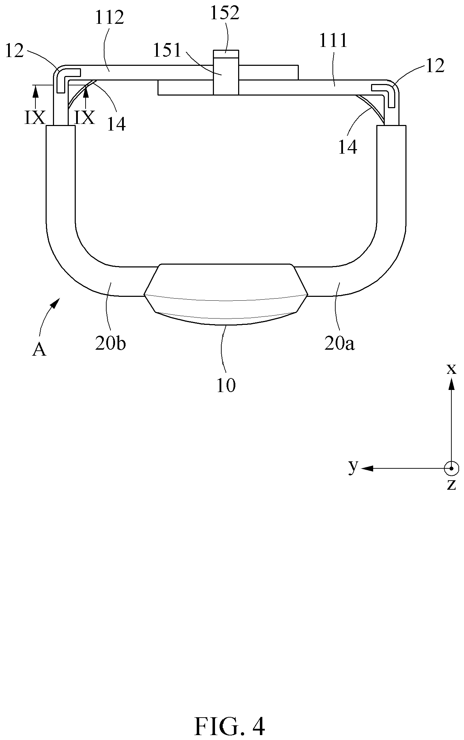

FIG. 3 is a plan view illustrating a supporter when a bistable spring is in a first stable state, according to an example embodiment, and FIG. 4 is a plan view illustrating a supporter when a bistable spring is in a second stable state, according to an example embodiment.

Referring to FIGS. 3 and 4, an exercise assistance apparatus 100 may include a supporter A that is worn on a user's body to supporter a part of the user's body. Here, the supporter A may include a main body 10, a pair of main frames 20a and 20b, a pair of straps 111 and 112, a bistable spring 12, a pad 14 and a pair of auxiliary straps 151 and 152.

The pair of main frames 20a and 20b may include the first main frame 20a connected to the right side of the main body 10 and the second main frame 20b connected to the left side of the main body 10. The pair of main frames 20a and 20b may partially surround a part of the user's body.

The pair of straps 111 and 112 may include the first strap 111 connected to the first main frame 20a and the second strap 112 connected to the second main frame 20b.

The first strap 111 and the second strap 112 may each have a 'first shape' as illustrated in FIG. 3 or a 'second shape' as illustrated in FIG. 4. For example, where the first strap 111 or the second strap 112 temporarily fails to maintain the 'first shape' or the 'second shape' due to an external force, the first strap 111 or the second strap 112 may be restored to the 'first shape' or the 'second shape' by a restoring force of the bistable spring 12.

Where the user does not enter the inside of the pair of main frames 20a and 20b, each of the straps 111 and 112 may maintain the 'first shape' and a shape extending forward from the pair of main frames 20a and 20b. On the other hand, when the user wears the exercise assistance apparatus 100, that is, when the user enters the inside of the pair of main frames 20a and 20b, each of the straps 111 and 112 may be transformed from the 'first shape' to the 'second shape' and wrap around the front of the user. For example, the user may apply an external force to the pair of straps 111 and 112 by hand to transform the pair of straps 111 and 112 from the 'first shape' to the 'second shape'.

The bistable spring 12 may be provided inside each of the straps 111 and 112 and may be maintained in any one of the two stable states through a restoring force. The two stable states may include a 'first stable state' in which the bistable spring 12 has a shape extending straight along the longitudinal direction and a 'second stable state' in which the bistable spring 12 has a shape that is bent once.

A shape of a strap may be determined according to a shape of the bistable spring 12. For example, when the bistable spring 12 is in the 'first stable state', the strap may maintain the 'first shape', and when the bistable spring 12 is in the 'second stable state', the strap may maintain the 'second shape'.

Where the bistable spring 12 provided inside the pair of straps 111 and 112 is in the 'first stable state', the pair of straps 111 and 112 may maintain shapes extending forward (+x direction) from the pair of main frames 20a and 20b, respectively.

Where the bistable spring 12 provided inside the pair of straps 111 and 112 is in the 'second stable state', the pair of straps 111 and 112 may overlap each other in the +x direction.

The pad 14 may be provided on the inside of a strap and overlap the bistable spring 12 in a direction perpendicular to the longitudinal direction of the strap. For example, the pad 14 provided on the inside (-y direction) of the first strap 111 may overlap the bistable spring 12 provided inside the first strap 111, based on a direction (y-axis direction) perpendicular to the longitudinal direction (x-axis) of the strap 111.

The pad 14 may adjust an angle formed by the pair of straps 111 and 112 when the pair of straps 111 and 112 is in the 'second shape'. The pad 14 may act as a resistance while the pair of straps 111 and 112 is in transition from the 'first shape' to the 'second shape'. As the thickness of the pad 14 increases, the angle formed by the pair of straps 111 and 112 in the 'second shape' may increase. The pad 14 may be detachable from the pair of straps 111 and 112. The exercise assistance apparatus may be adjusted to fit the user's body size by appropriately utilizing the thickness and material of the pad 14 to adjust an angle of the strap in the 'second shape'.

The pair of straps 111 and 112 may be fixed by surrounding the second strap 112, in a state in which the pair of auxiliary straps 151 and 152 is connected to the first strap 111 and the first strap 111 overlaps the second strap 112. For example, an auxiliary bistable spring (not shown) may be provided inside the pair of auxiliary straps 151 and 152.

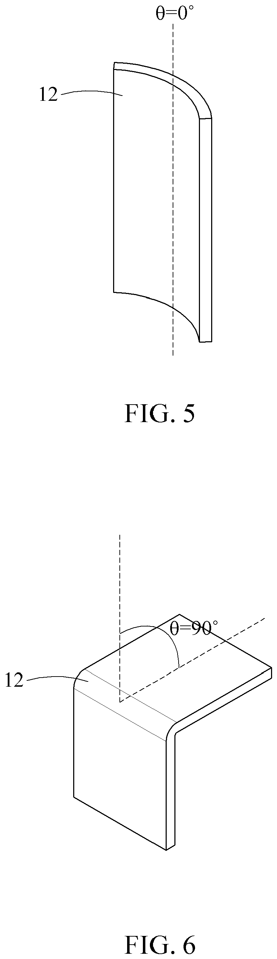

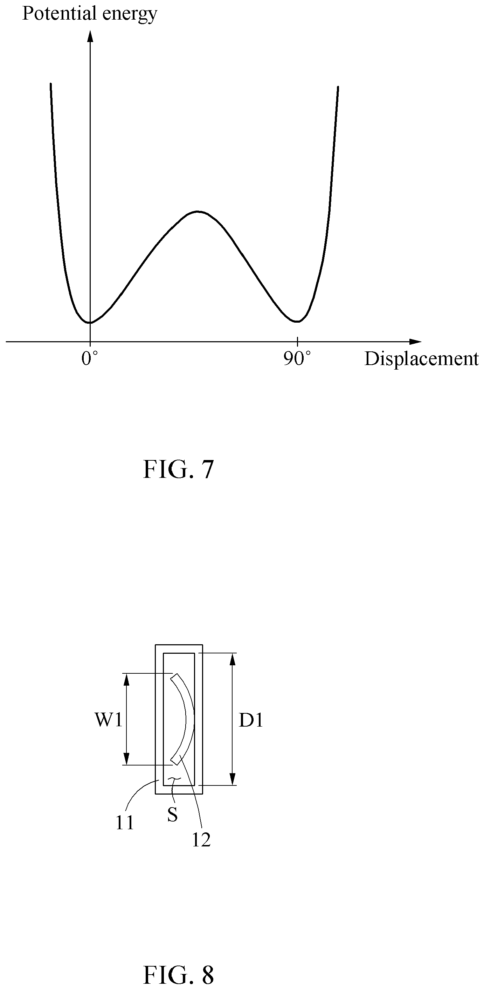

FIG. 5 is a perspective view illustrating a bistable spring in a first stable state, FIG. 6 is a perspective view illustrating a bistable spring in a second stable state, and FIG. 7 is a schematic graph of potential energy according to a displacement angle of a bistable spring.

Referring to FIGS. 5 to 7, when a bistable spring 12 is in the 'first stable state', the bistable spring 12 may have a protruding shape in a direction (x-axis direction) perpendicular to the longitudinal direction (y-axis direction). The bistable spring 12 may transform such that a curvature of the protruding shape decreases during transition from the 'first stable state' to the 'second stable state'. That is, when the bistable spring 12 is in the 'second stable state', the bistable spring 12 may have a relatively flat shape except for a curved portion.

A state where the bistable spring 12 is 0 degrees and a state where the bistable spring is 90 degrees with respect to the y-axis may correspond to a point with the smallest potential energy and are illustrated as the 'first stable state' and the 'second stable state', respectively. However, the angles constituting the stable state may not be limited to 0 degrees or 90 degrees and may vary depending on a material or shape of a bistable spring.

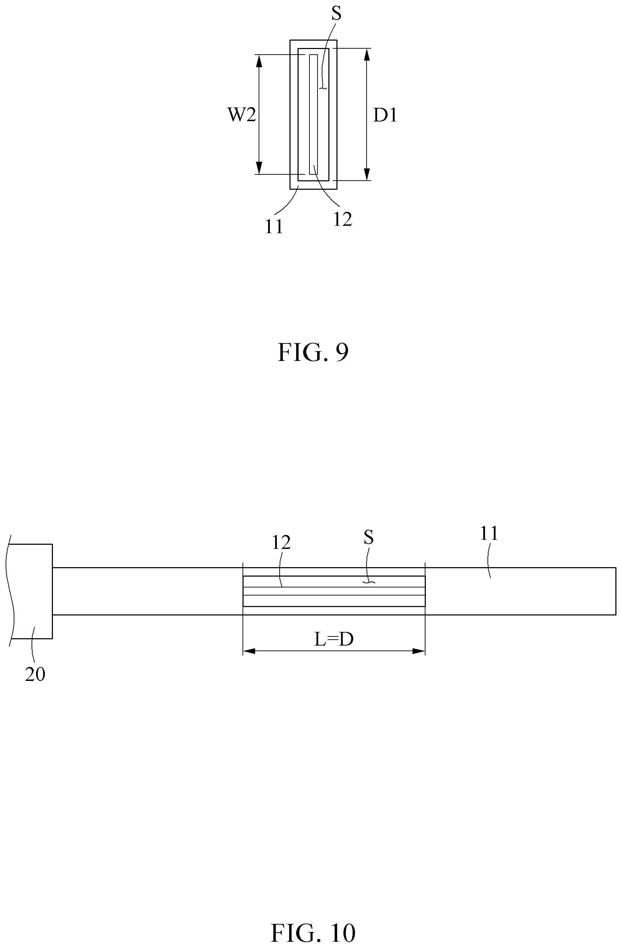

FIG. 8 is a cross-sectional view taken along the line VIII-VIII of FIG. 3, FIG. 9 is a cross-sectional view taken along the line IX-IX of FIG. 3, and FIG. 10 is a cross-sectional view illustrating a main frame, a strap, and a bistable spring, according to an example embodiment.

Referring to FIGS. 8 to 10, a strap 11 may include an accommodation space s for accommodating a bistable spring 12. A position of the bistable spring 12 may be fixed with respect to a longitudinal direction of the strap 11. For example, the width of the accommodation space s based on the longitudinal direction of the strap 11 may be the same as the width of the bistable spring 12.

On the other hand, based on a direction perpendicular to the longitudinal direction of the strap 11, the width of the accommodating space s may be greater than the width of the strap 11. According to such a shape, a state may be freely transformed between the 'first stable state' and the 'second stable state' within the bistable spring 12.

In the first stable state, a width W1 of the bistable spring 12 may be less than a width D1 of the accommodation space s. In addition, in the second stable state, a width W2 of the bistable spring 12 may be greater than the width W1 of the bistable spring 12 and less than the width D1 of the accommodation space s. According to such a structure, the bistable spring 12 may transform a state without interfering with the inner wall of the strap 11 forming the accommodation space s.

A length L of the bistable spring 12 may be equal to a length D of the accommodation space s. The bistable spring 12 may be fixed inside the strap 11.

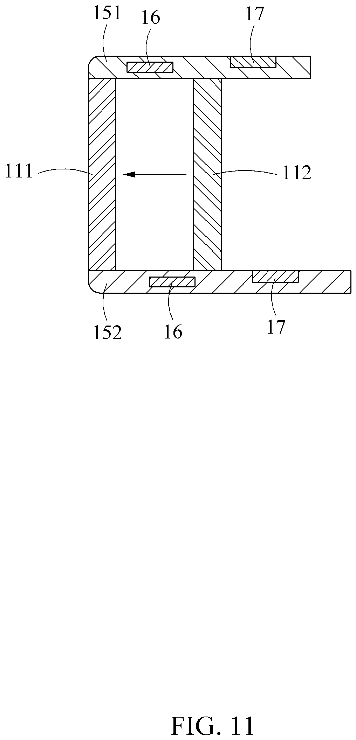

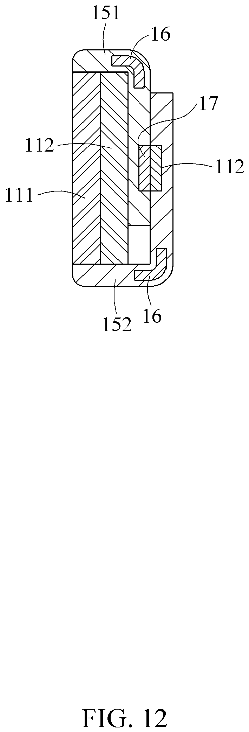

FIG. 11 is a cross-sectional view illustrating a state in which a second strap approaches a first strap, and FIG. 12 is a cross-sectional view illustrating a state in which a pair of straps is fixed by a fastening member.

Referring to FIGS. 11 and 12, each of auxiliary straps 151 and 152 may be provided with an auxiliary bistable spring 16. The pair of auxiliary straps 151 and 152 may maintain a straight shape in a state in which an external force is not applied to the pair of auxiliary straps 151 and 152 by the auxiliary bistable spring 16. Since the pair of auxiliary straps 151 and 152 maintains a shape extending straight, a user may bring a second strap 112 closer to a first strap 111 without opening the pair of auxiliary straps 151 and 152.

Each of the auxiliary straps 151 and 152 may be provided with a magnet 17 for fixation. Based on a state in which the auxiliary straps 151 and 152 overlap each other, the magnet 17 provided in the first strap 151 and the magnet 17 provided in the second strap 152 may face each other with opposite polarity.

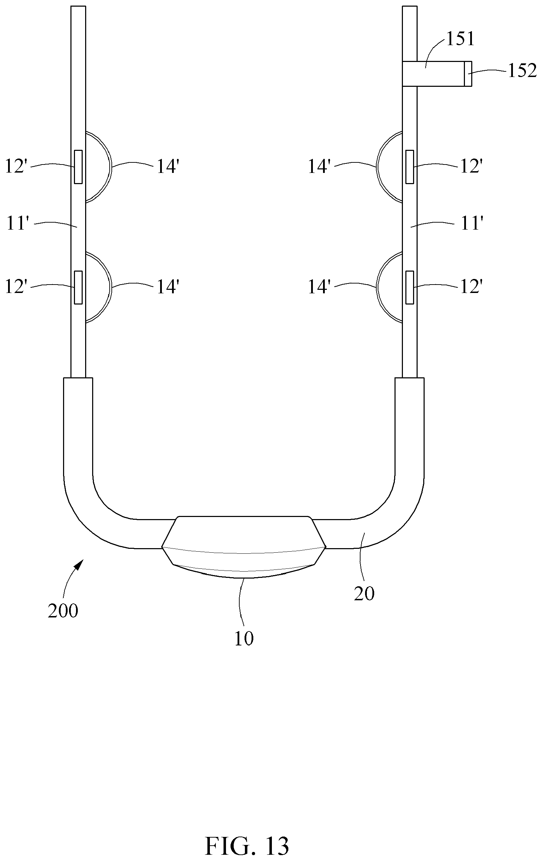

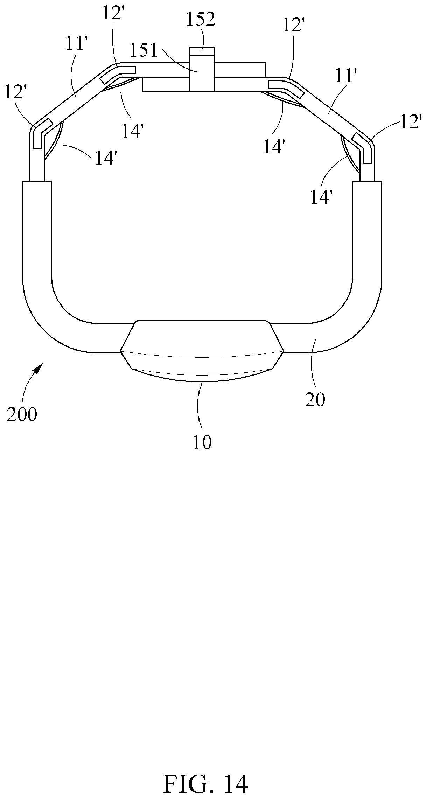

FIGS. 13 and 14 are plan views illustrating a supporter according to an example embodiment.

Referring to FIGS. 13 and 14, an exercise assistance apparatus 200 may include a main body 10, a main frame 20, a strap 11, a bistable spring 12', a pad 14', and auxiliary straps 151 and 152.

The bistable springs 12 ' and the pads 14 'may be provided in plurality and apart from each other in the longitudinal direction of the strap 11. A stable shape implementable by the strap 11' may be adjusted through a plurality of bistable springs 12'. For example, in the case of a user with a large torso, the strap 11' may need to be bent multiple times. In this case, the number of times the strap 11' is bent may be set by using the plurality of bistable springs 12'.

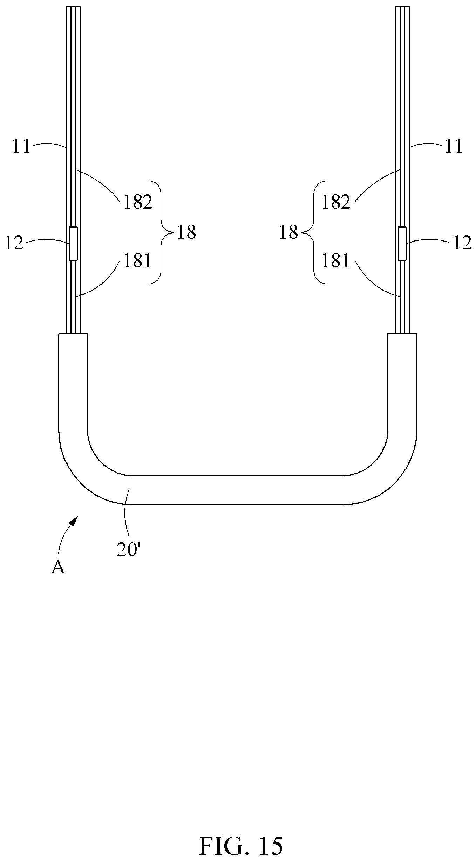

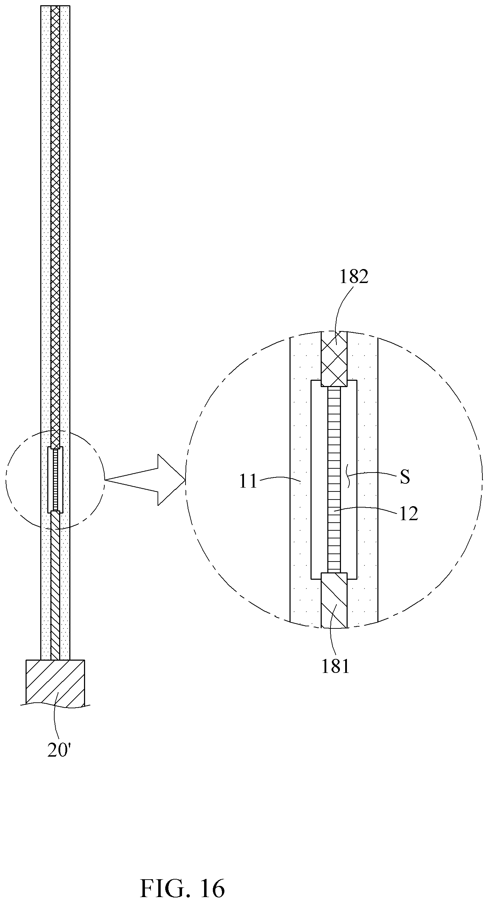

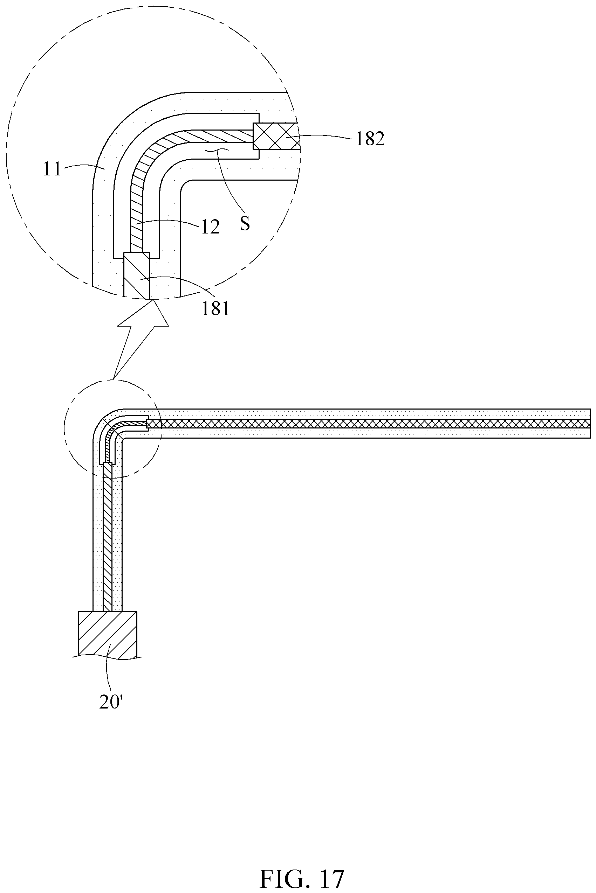

FIG. 15 is a plan view schematically illustrating a supporter according to an example embodiment, and FIGS. 16 and 17 are cross-sectional views illustrating a main frame, a strap, a bistable spring, and an inner frame, according to an example embodiment.

Referring to FIGS. 15 to 17, a supporter A may include a main frame 20', a pair of straps 11 connected to both ends of the main frame 20 ', respectively, a bistable spring 12 provided inside the strap 11, and an inner frame 18 connected to each of both end portions of the bistable spring 12.

The main frame 20 ' may not be connected to a main body, unlike the main frame described with reference to FIGS. 1 to 17. The main frame 20' may have, for example, a U-shape. The supporter A may wrap around a part of a user's body.

The inner frame 18 may be formed of a material relatively stronger than the strap 11. The inner frame 18 may assist the strap 11 to maintain a shape. For example, the inner frame 18 may include a first inner frame 181, which extends from one end of the main frame 20 ' and is connected to one end of the bistable spring 12, and a second inner frame 182, which is connected to the other end of the bistable spring 12 and extends toward one end of the strap 11.

The inner frame 18 may not be exposed to the outside since the inner frame 18 is covered by the strap 11. The inner frame 18 may fix the position of the bistable spring 12 provided inside an accommodation space s.

FIG. 18 is a front view schematically illustrating a state in which a supporter is worn on the body, according to an example embodiment.

Referring to FIG. 18, a supporter A may be worn at various positions on the body of a user U. For example, the supporter A may be worn on the user's upper arm to assist the user's elbow joint motion together with an actuator, a joint member, and a driving frame (not shown). In another example, the supporter A may be worn on the user's thigh to assist the user's knee joint motion.

As described above, although the examples have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components.

Therefore, the scope of the disclosure is defined not by the detailed description, but by the claims, and all variations within the scope of the claims are to be construed as being included in the disclosure.

## Claims

1. A supporter comprising:
a main body (10);
a pair of main frames (20a, 20b) connected to the main body (10);
a pair of straps (11, 11', 111, 112) connected to the pair of main frames (20a, 20b), respectively; and
a bistable spring (12, 12') which is provided inside each of the pair of the straps (11, 11', 111, 112) and maintained in one of two stable states by a restoring force,
wherein the two stable states correspond to different displacements of the bistable spring (12, 12') resulting in a smallest potential energy, wherein the bistable spring (12, 12') has a shape extending straight along the longitudinal direction in a first stable state and has a shape that is bent once in a second stable state, and
the shape of the strap (11, 11', 111, 112) is determined according to the shape of the bistable spring (12, 12').

2. The supporter of claim 1, wherein each of the pair of straps (11, 11', 111, 112) is maintained in a shape extending forward from the main frame (20, 20') through the restoring force when the bistable spring (12, 12') is in the first stable state.

3. The supporter of claim 1, wherein a first strap (11, 111) of the pair of straps overlaps a second strap (11', 112) of the pair of straps, where both of the bistable springs (12, 12') provided inside the pair of straps (11, 11', 111, 112), respectively, are in the second stable state.

4. The supporter of claim 1, wherein the bistable spring (12, 12') has a protruding shape in a direction perpendicular to the longitudinal direction when the bistable spring (12, 12') is in the first stable state, and a curvature of the protruding shape decreases during transition from the first stable state to the second stable state.

5. The supporter of claim 1, wherein a position of the bistable spring (12, 12') is fixed based on a longitudinal direction of the strap (11, 11', 111, 112).

6. The supporter of claim 1, wherein
the strap (11, 11', 111, 112) comprises an accommodation space for accommodating the bistable spring (12, 12'), and
a width of the accommodation space is greater than a width of the strap (11, 11', 111, 112), based on a direction perpendicular to a longitudinal direction of the strap (11, 11', 111, 112).

7. The supporter of claim 6, wherein a width of the bistable spring (12, 12') in the second stable state is greater than a width of the bistable spring (12, 12') in the first stable state and less than the width of the accommodation space.

8. The supporter of claim 1, further comprising a pad (14, 14') provided inside the strap (11, 11', 111, 112) and configured to overlap the bistable spring (12, 12') with respect to a direction perpendicular to a longitudinal direction of the strap (11, 11', 111, 112).

9. The supporter of claim 8, wherein the pad (14, 14') is detachable from the strap (11, 11', 111, 112).

10. The supporter of claim 1, further comprising a pair of auxiliary straps (15, 151, 152) connected to any one of the pair of straps (11, 11', 111, 112) and configured to wrap around the other strap (11, 11', 111, 112).

11. The supporter of claim 10, further comprising an auxiliary bistable spring (16) provided inside each of the auxiliary straps (15, 151, 152).

12. The supporter of claim 1, further comprising an inner frame (18) provided inside the strap (11, 11', 111, 112) and comprising a material that is stiffer than that of the strap (11, 11', 111, 112).

13. The supporter of claim 12, wherein the inner frame (18) comprises:
a first inner frame (181) extending from the main frame (20, 20') and connected to the bistable spring (12, 12'); and
a second inner frame (182) extending from the bistable spring (12, 12') toward an end portion of the strap (11, 11', 111, 112).

14. The supporter of claim 1, wherein the bistable spring (12, 12') is provided in plurality, and the bistable springs (12, 12') are apart from each other in a longitudinal direction of the strap (11, 11', 111, 112).

15. An exercise assistance apparatus (100, 200) comprising:
the supporter according to claim 1;
an actuator (21) disposed in the main frame (20, 20'); and
a driving frame (23) configured to be rotatable by receiving power from the actuator (21).

## Patentansprüche

1. Stütze, umfassend:
einen Hauptkörper (10);
ein Paar Hauptrahmen (20a, 20b), die mit dem Hauptkörper (10) verbunden sind;
ein Paar Riemen (11, 11', 111, 112), die jeweils mit dem Paar Hauptrahmen (20a, 20b) verbunden sind; und
eine bistabile Feder (12, 12'), die im Inneren jedes der Riemenpaare (11, 11', 111, 112) vorgesehen ist und durch eine Rückstellkraft in einem von zwei stabilen Zuständen gehalten wird,
wobei die zwei stabilen Zustände unterschiedlichen Verschiebungen der bistabilen Feder (12, 12') entsprechen, die zu einer kleinsten potenziellen Energie führen, wobei die bistabile Feder (12, 12') in einem ersten stabilen Zustand eine Form aufweist, die sich gerade entlang der Längsrichtung erstreckt, und in einem zweiten stabilen Zustand eine Form aufweist, die einmal gebogen ist, und
die Form des Riemens (11, 11', 111, 112) in Abhängigkeit von der Form der bistabilen Feder (12, 12') bestimmt wird.

2. Stütze nach Anspruch 1, wobei jedes der Riemenpaare (11, 11', 111, 112) durch die Rückstellkraft in einer sich vom Hauptrahmen (20, 20') nach vorne erstreckenden Form gehalten wird, wenn sich die bistabile Feder (12, 12') im ersten stabilen Zustand befindet.

3. Stütze nach Anspruch 1, wobei ein erster Riemen (11, 111) des Riemenpaares einen zweiten Riemen (11', 112) Riemenpaares überlappt, wobei beide der bistabilen Federn (12, 12'), die jeweils innerhalb des Riemenpaares (11, 11', 111, 112) vorgesehen sind, in dem zweiten stabilen Zustand sind.

4. Stütze nach Anspruch 1, wobei die bistabile Feder (12, 12') eine vorspringende Form in einer Richtung senkrecht zur Längsrichtung aufweist, wenn sich die bistabile Feder (12, 12') im ersten stabilen Zustand befindet, und eine Krümmung der vorspringenden Form während des Übergangs vom ersten stabilen Zustand in den zweiten stabilen Zustand abnimmt.

5. Stütze nach Anspruch 1, wobei eine Position der bistabilen Feder (12, 12') basierend auf einer Längsrichtung des Riemens (11, 11', 111, 112) festgelegt ist.

6. Stütze nach Anspruch 1, wobei
der Riemen (11, 11', 111, 112) einen Aufnahmeraum für die Aufnahme der bistabilen Feder (12, 12') umfasst, und
eine Breite des Aufnahmeraums größer ist als eine Breite des Riemens (11, 11', 111, 112), basierend auf einer Richtung senkrecht zu einer Längsrichtung des Riemens (11, 11', 111, 112).

7. Stütze nach Anspruch 6, wobei eine Breite der bistabilen Feder (12, 12') im zweiten stabilen Zustand größer als eine Breite der bistabilen Feder (12, 12') im ersten stabilen Zustand und kleiner als die Breite des Aufnahmeraums ist.

8. Stütze nach Anspruch 1, ferner umfassend eine Polsterung (14, 14'), die innerhalb des Riemens (11, 11', 111, 112) vorgesehen und so konfiguriert ist, dass sie die bistabile Feder (12, 12') in Bezug auf eine Richtung senkrecht zu einer Längsrichtung des Riemens (11, 11', 111, 112) überlappt.

9. Stütze nach Anspruch 8, wobei die Polsterung (14, 14') vom Riemen (11, 11', 111, 112) abnehmbar ist.

10. Stütze nach Anspruch 1, ferner umfassend ein Paar Hilfsriemen (15, 151, 152), die mit einem des Riemenpaares (11, 11', 111, 112) verbunden und so konfiguriert sind, dass sie den anderen Riemen (11, 11', 111, 112) umwickeln.

11. Stütze nach Anspruch 10, ferner umfassend eine bistabile Hilfsfeder (16), die in jedem der Hilfsriemen (15, 151, 152) vorgesehen ist.

12. Stütze nach Anspruch 1, ferner umfassend einen inneren Rahmen (18), der innerhalb des Riemens (11, 11', 111, 112) vorgesehen ist und ein Material umfasst, das steifer ist als das des Riemens (11, 11', 111, 112).

13. Stütze nach Anspruch 12, wobei der innere Rahmen (18) Folgendes umfasst:
einen ersten inneren Rahmen (181), der sich von dem Hauptrahmen (20, 20') erstreckt und mit der bistabilen Feder (12, 12') verbunden ist; und
einen zweiten inneren Rahmen (182), der sich von der bistabilen Feder (12, 12') in Richtung eines Endabschnitts des Riemens (11, 11', 111, 112) erstreckt.

14. Stütze nach Anspruch 1, wobei die bistabile Feder (12, 12') in einer Vielzahl vorgesehen ist und die bistabilen Federn (12, 12') in einer Längsrichtung des Riemens (11, 11', 111, 112) voneinander beabstandet sind.

15. Übungsunterstützungsvorrichtung (100, 200), umfassend:
die Stütze gemäß Anspruch 1;
ein Stellglied (21), das in dem Hauptrahmen (20, 20') angeordnet ist; und
einen Antriebsrahmen (23), der so konfiguriert ist, dass er durch den Empfang von Energie vom Stellglied (21) drehbar ist.

## Revendications

1. Support, comprenant :
un corps principal (10) ;
une paire de cadres principaux (20a, 20b) reliés au corps principal (10) ;
une paire de sangles (11, 11', 111, 112) reliées à la paire de cadres principaux (20a, 20b), respectivement ; et
un ressort bistable (12, 12') placé à l'intérieur de chacune de la paire de sangles (11, 11', 111, 112) et maintenu dans l'un des deux états stables par une force de rappel,
dans lequel les deux états stables correspondent à des déplacements différents du ressort bistable (12, 12') résultant en une énergie potentielle la plus petite, dans lequel le ressort bistable (12, 12') a une forme s'étendant en ligne droite le long de la direction longitudinale dans un premier état stable et a une forme qui est pliée une fois dans un second état stable, et
dans lequel la forme de la sangle (11, 11', 111, 112) est déterminée en fonction de la forme du ressort bistable (12, 12').

2. Support de la revendication 1, dans lequel chacune de la paire de sangles (11, 11', 111, 112) est maintenue dans une forme s'étendant vers l'avant du cadre principal (20, 20') par la force de rappel lorsque le ressort bistable (12, 12') est dans le premier état stable.

3. Support de la revendication 1, dans lequel une première sangle (11, 111) de la paire de sangles chevauche une seconde sangle (11', 112) de la paire de sangles, où les deux ressorts bistables (12, 12') prévus à l'intérieur de la paire de sangles (11, 11', 111, 112), respectivement, sont dans le second état stable.

4. Support de la revendication 1, dans lequel le ressort bistable (12, 12') a une forme saillante dans une direction perpendiculaire à la direction longitudinale lorsque le ressort bistable (12, 12') est dans le premier état stable, et une courbure de la forme saillante diminue pendant la transition du premier état stable au second état stable.

5. Support de la revendication 1, dans lequel une position du ressort bistable (12, 12') est fixée en se basant sur une direction longitudinale de la sangle (11, 11', 111, 112).

6. Support de la revendication 1, dans lequel
la sangle (11, 11', 111, 112) comprend un espace de logement pour loger le ressort bistable (12, 12'), et
une largeur de l'espace de logement est supérieure à une largeur de la sangle (11, 11', 111, 112), en se basant sur une direction perpendiculaire à une direction longitudinale de la sangle (11, 11', 111, 112).

7. Support de la revendication 6, dans lequel une largeur du ressort bistable (12, 12') dans le second état stable est supérieure à une largeur du ressort bistable (12, 12') dans le premier état stable et inférieure à la largeur de l'espace de logement.

8. Support de la revendication 1, comprenant en outre un tampon (14, 14') prévu à l'intérieur de la sangle (11, 11', 111, 112) et configuré pour chevaucher le ressort bistable (12, 12') par rapport à une direction perpendiculaire à une direction longitudinale de la sangle (11, 11', 111, 112).

9. Support de la revendication 8, dans lequel le tampon (14, 14') est détachable de la sangle (11, 11', 111, 112).

10. Support de la revendication 1, comprenant en outre une paire de sangles auxiliaires (15, 151, 152) reliées à l'une quelconque de la paire de sangles (11, 11', 111, 112) et configurées pour s'enrouler autour de l'autre sangle (11, 11', 111, 112).

11. Support de la revendication 10, comprenant en outre un ressort bistable auxiliaire (16) prévu à l'intérieur de chacune des sangles auxiliaires (15, 151, 152).

12. Support de la revendication 1, comprenant en outre un cadre intérieur (18) prévu à l'intérieur de la sangle (11, 11', 111, 112) et comprenant un matériau plus rigide que celui de la sangle (11, 11', 111, 112).

13. Support de la revendication 12, dans lequel le cadre intérieur (18) comprend :
un premier cadre intérieur (181) s'étendant à partir du cadre principal (20, 20') et relié au ressort bistable (12, 12') ; et
un second cadre intérieur (182) s'étendant du ressort bistable (12, 12') vers une partie d'extrémité de la sangle (11, 11', 111, 112).

14. Support de la revendication 1, dans lequel le ressort bistable (12, 12') est fourni en pluralité, et les ressorts bistables (12, 12') sont espacés les uns des autres dans une direction longitudinale de la sangle (11, 11', 111, 112).

15. Dispositif d'aide à l'exercice (100, 200) comprenant :
le support de la revendication 1 ;
un actionneur (21) disposé dans le cadre principal (20, 20') ; et
un cadre d'entraînement (23) configuré pour être rotatif en recevant l'alimentation de l'actionneur (21).
